# EUROPEAN PATENT APPLICATION

(11) **EP 3 715 043 A1**
(43) Date of publication of application: **30.09.2020**
(21) Application number: 20165467.0
(22) Date of filing: 25.03.2020
(51) Int. Cl.: B23P 6/00, F23R 3/28

(54) **AFTERMARKET REPAIR PROCESS FOR A FUEL NOZZLE GUIDE HEAT SHIELD OF A GAS TURBINE ENGINE**

(30) Priority: 25.03.2019 US 201916363220
(71) Applicant: United Technologies Corporation, Farmington, CT 06032 (US)
(72) Inventor: RABINOVICH, Albert, West Hartford, CT 06107 (US); ROSE, William M., Conway, SC 29526 (US); BRINDLEY, William J., Hebron, CT 06248 (US)
(74) Representative: Dehns

(57) **Abstract**

A method for repairing a fuel nozzle guide (100; 200) includes mechanically separating a heat shield (110; 210) of a damaged fuel nozzle guide (100; 200) from an inner portion (120; 220) of the fuel nozzle guide (100; 200), manufacturing a replacement heat shield (110; 210) for the damaged fuel nozzle guide (100; 200), and joining the replacement heat shield (110; 210) to the inner portion (120; 220) of the fuel nozzle guide (100; 200).

## Description

### TECHNICAL FIELD

The present disclosure relates generally to aftermarket repair processes for a fuel nozzle guide heat shield of a gas turbine engine, and particularly to a process incorporating an additively manufactured heat shield into the repaired article.

### BACKGROUND

Gas turbine engines, such as those utilized in commercial and military aircraft, include a compressor section that compresses air, a combustor section in which the compressed air is mixed with a fuel and ignited, and a turbine section across which the resultant combustion products are expanded. The expansion of the combustion products drives the turbine section to rotate. As the turbine section is connected to the compressor section via a shaft, the rotation of the turbine section further drives the compressor section to rotate. In some examples, a fan is also connected to the shaft and is driven to rotate via rotation of the turbine as well.

Multiple fuel nozzle guides that protect fuel nozzles are included within the combustor section of the gas turbine engine. During operation of the gas turbine engine, the fuel nozzle guide heat shields various forms of damage, particularly to the outer ring of the heat shield. Over time, the damage to the fuel nozzle guide heat shields necessitates repair or replacement.

### SUMMARY OF THE INVENTION

An aspect of the present invention provides a method for repairing a fuel nozzle guide including mechanically separating a heat shield of a damaged fuel nozzle guide from an inner portion of the fuel nozzle guide, manufacturing a replacement heat shield of the damaged fuel nozzle guide, and joining the replacement heat shield to the inner portion.

In an example of the above described method, manufacturing the replacement heat shield comprises additively manufacturing the replacement heat shield.

Another example of any of the above described methods further includes determining a set of actual dimensions of the heat shield and manufacturing the replacement heat shield according to the determined actual dimensions of the heat shield.

Another example of any of the above described methods further includes removing artifacts of the mechanical separation from the inner portion prior to joining the replacement heat shield to the inner portion.

In another example of any of the above described methods, joining the replacement heat shield to the inner portion comprises fusing the replacement rim portion to the inner diameter portion.

In another example of any of the above described methods, fusing the replacement heat shield to the inner portion provides a 100% penetration of the inner portion.

In another example of any of the above described methods, fusing the replacement heat shield to the inner portion uses one of a plasma weld fusion, an electron beam weld fusion, a laser weld fusion, and a gas tungsten arc weld fusion.

Another example of any of the above described methods further includes repairing at least one crack in the inner portion prior to joining the replacement heat shield to the inner portion.

In another example of any of the above described methods, manufacturing the replacement heat shield comprises creating a replacement heat shield having approximately identical dimensions to the heat shield.

Another aspect of the present invention provides a fuel nozzle guide including a heat shield, wherein the heat shield is a ring defining an axis, an inner portion fused to the heat shield and extending radially inward from and axially along the axis, and wherein the heat shield is an additively manufactured replacement heat shield. The heat shield may be approximately identical to an original cast heat shield.

In an example of the above described fuel nozzle guide, a fusion between the inner portion and the heat shield extends along a full inner circumference of an inner diameter of the heat shield.

In another example of any of the above described fuel nozzle guides, the fusion provides a 100% penetration of the inner portion.

In another example of any of the above described fuel nozzle guides, the fusion is one of a plasma weld fusion, an electron beam weld fusion, a laser weld fusion, and a gas arc weld fusion.

In another example of any of the above described fuel nozzle guides, the heat shield further includes a plurality of cooling splines extending axially from a face of the heat shield.

In another example of any of the above described fuel nozzle guides the plurality of cooling splines are distributed circumferentially evenly about the heat shield.

In another example of any of the above described fuel nozzle guides, each of the cooling splines in the plurality of cooling splines includes an axially outward corner defining a sharp corner angle.

In another example of any of the above described fuel nozzle guides, the sharp corner angle is in the range of 89 to 91 degrees.

Another aspect of the present invention provides a repair process for a gas turbine engine including identifying a damaged fuel nozzle guide, wherein the damaged fuel nozzle guide is a cast single component, mechanically separating a heat shield from a remainder of the damaged fuel nozzle guide, additively manufacturing a replacement heat shield, and fusing the replacement heat shield to the remainder of the damaged fuel nozzle guide, thereby repairing the damaged fuel nozzle guide.

In an example of the above described repair process for a gas turbine engine, fusing the replacement heat shield to the remainder of the damaged fuel nozzle guide comprises applying a fusion process includes a 100% penetration of a contact between the replacement heat shield and the remainder of the damaged fuel nozzle guide.

In another example of any of the above described repair processes for a gas turbine engine includes additively manufacturing the replacement heat shield comprises determining an actual dimension of the remainder of the fuel nozzle guide, and additively manufacturing the replacement heat shield to match.

These and other features of the present invention can be best understood from the following specification and drawings, the following of which is a brief description.

### BRIEF DESCRIPTION OF THE DRAWINGS

Figure 1 illustrates a high level schematic view of an exemplary imaging system.
Figure 2 schematically illustrates an exemplary damaged fuel nozzle guide.
Figures 3A-3D Schematically illustrate the exemplary damaged fuel nozzle guide of Figure 2 throughout a repair process.
Figure 4 illustrates a flowchart demonstrating a method for employing the repair process of Figures 3A-3D.

### DETAILED DESCRIPTION

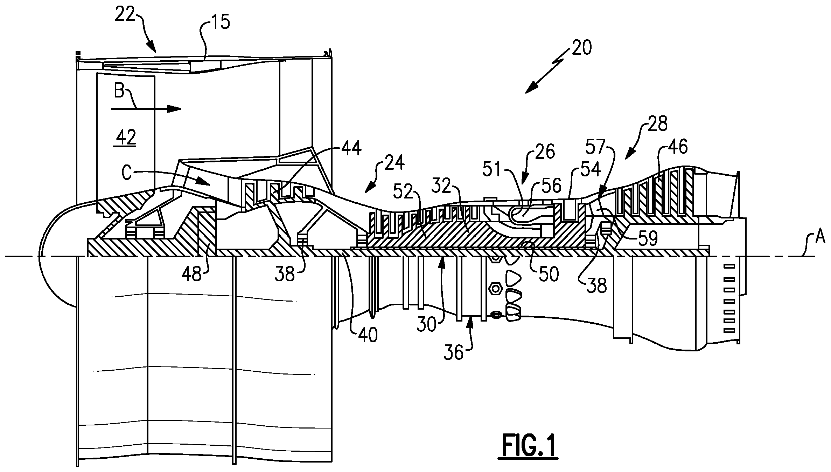

Figure 1 schematically illustrates a gas turbine engine 20. The gas turbine engine 20 is disclosed herein as a two-spool turbofan that generally incorporates a fan section 22, a compressor section 24, a combustor section 26 and a turbine section 28. The fan section 22 drives air along a bypass flow path B in a bypass duct defined within a nacelle 15, and also drives air along a core flow path C for compression and communication into the combustor section 26 then expansion through the turbine section 28. Although depicted as a two-spool turbofan gas turbine engine in the disclosed non-limiting embodiment, it should be understood that the concepts described herein are not limited to use with two-spool turbofans as the teachings may be applied to other types of turbine engines including three-spool architectures.

The exemplary engine 20 generally includes a low speed spool 30 and a high speed spool 32 mounted for rotation about an engine central longitudinal axis A relative to an engine static structure 36 via several bearing systems 38. It should be understood that various bearing systems 38 at various locations may alternatively or additionally be provided, and the location of bearing systems 38 may be varied as appropriate to the application.

The low speed spool 30 generally includes an inner shaft 40 that interconnects a fan 42, a first (or low) pressure compressor 44 and a first (or low) pressure turbine 46. The inner shaft 40 is connected to the fan 42 through a speed change mechanism, which in exemplary gas turbine engine 20 is illustrated as a geared architecture 48 to drive the fan 42 at a lower speed than the low speed spool 30. The high speed spool 32 includes an outer shaft 50 that interconnects a second (or high) pressure compressor 52 and a second (or high) pressure turbine 54. A combustor 56 is arranged in exemplary gas turbine 20 between the high pressure compressor 52 and the high pressure turbine 54. A mid-turbine frame 57 of the engine static structure 36 is arranged generally between the high pressure turbine 54 and the low pressure turbine 46. The mid-turbine frame 57 further supports bearing systems 38 in the turbine section 28. The inner shaft 40 and the outer shaft 50 are concentric and rotate via bearing systems 38 about the engine central longitudinal axis A which is collinear with their longitudinal axes.

The core airflow is compressed by the low pressure compressor 44 then the high pressure compressor 52, mixed and burned with fuel in the combustor 56, then expanded over the high pressure turbine 54 and low pressure turbine 46. The mid-turbine frame 57 includes airfoils 59 which are in the core airflow path C. The turbines 46, 54 rotationally drive the respective low speed spool 30 and high speed spool 32 in response to the expansion. It will be appreciated that each of the positions of the fan section 22, compressor section 24, combustor section 26, turbine section 28, and fan drive gear system 48 may be varied. For example, gear system 48 may be located aft of combustor section 26 or even aft of turbine section 28, and fan section 22 may be positioned forward or aft of the location of gear system 48.

The engine 20 in one example is a high-bypass geared aircraft engine. In a further example, the engine 20 bypass ratio is greater than about six, with an example embodiment being greater than about ten, the geared architecture 48 is an epicyclic gear train, such as a planetary gear system or other gear system, with a gear reduction ratio of greater than about 2.3 and the low pressure turbine 46 has a pressure ratio that is greater than about five. In one disclosed embodiment, the engine 20 bypass ratio is greater than about ten, the fan diameter is significantly larger than that of the low pressure compressor 44, and the low pressure turbine 46 has a pressure ratio that is greater than about five. Low pressure turbine 46 pressure ratio is pressure measured prior to inlet of low pressure turbine 46 as related to the pressure at the outlet of the low pressure turbine 46 prior to an exhaust nozzle. The geared architecture 48 may be an epicycle gear train, such as a planetary gear system or other gear system, with a gear reduction ratio of greater than about 2.3:1. It should be understood, however, that the above parameters are only exemplary of one embodiment of a geared architecture engine and that the present invention is applicable to other gas turbine engines including direct drive turbofans.

A significant amount of thrust is provided by the bypass flow B due to the high bypass ratio. The fan section 22 of the engine 20 is designed for a particular flight condition -- typically cruise at about 0.8 Mach and about 35,000 feet (10,668 meters). The flight condition of 0.8 Mach and 35,000 ft (10,668 meters), with the engine at its best fuel consumption - also known as "bucket cruise Thrust Specific Fuel Consumption ('TSFC')" - is the industry standard parameter of lbm of fuel being burned divided by lbf of thrust the engine produces at that minimum point. "Low fan pressure ratio" is the pressure ratio across the fan blade alone, without a Fan Exit Guide Vane ("FEGV") system. The low fan pressure ratio as disclosed herein according to one non-limiting embodiment is less than about 1.45. "Low corrected fan tip speed" is the actual fan tip speed in ft/sec divided by an industry standard temperature correction of [(Tram °R) / (518.7 °R)]^^{0.5} (where °R = 9/5 x K). The "Low corrected fan tip speed" as disclosed herein according to one non-limiting embodiment is less than about 1150 ft / second (350.5 meters/second).

Included within the combustor 56 of the gas turbine engine 20 are multiple fuel nozzle guides 57. The fuel nozzle guides 57 secure and protect a fuel nozzle that provides combustible fuel to the combustor 56 within the gas turbine engine 20. In one example, the fuel nozzle guide 57 secures the fuel nozzle to the combustor 56 and maintains the position of the fuel nozzle within the static structure of the combustor 56. Due to the position of the fuel nozzle guide heat shield 57 in or adjacent to the combustor 56, the fuel nozzle guide heat shield portion 57 is exposed to substantial thermal fatigue which can result in cracking, or other damage to the fuel nozzle guide heat shield portion 57.

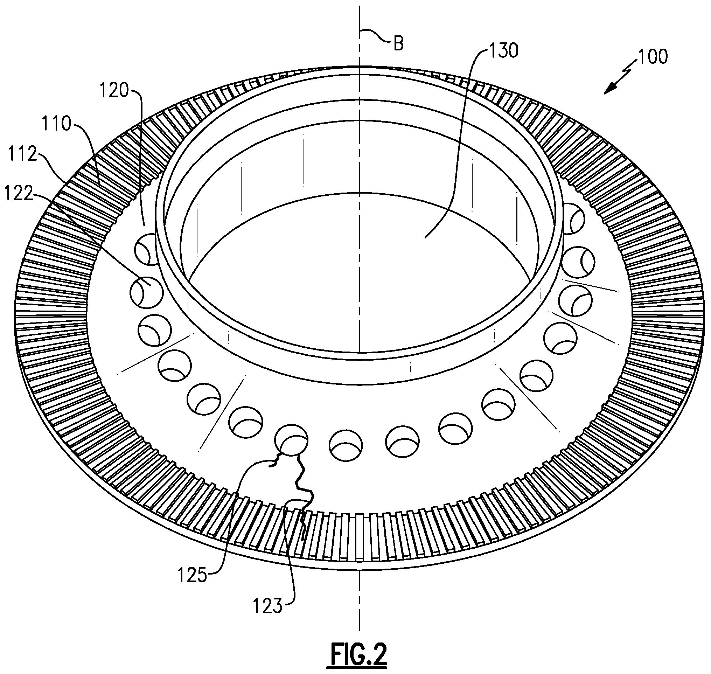

With continued reference to Figure 1, Figure 2 schematically illustrates an exemplary fuel nozzle guide 100 that could be incorporated in the engine 20 of Figure 1. The fuel nozzle guide 100 includes a heat shield 110 and an inner portion 120. The heat shield 110 is a ring with multiple cooling splines 112 protruding from the ring along an axis B defined by the fuel nozzle guide 100. In the example of Figure 1, the heat shield 110 includes cooling splines 112 evenly distributed about the entire circumference of the heat shield 110. In alternative examples, the cooling splines 112 can be unevenly distributed, or concentrated in one or more area of the heat shield 110. In yet further examples, the cooling splines 112 can be uniform in length (i.e. extend the same length along the axis B) or can be non-uniform in length. The exemplary fuel nozzle guide 100 of Figure 2 is created via a casting process as a single unitary structure, and is not created from multiple distinct components that are joined together.

The inner portion 120 extends radially outward from the heat shield 110 and extends along the axis B. Distributed about a circumference of the inner portion 120 are multiple cooling holes 122. Each of the cooling holes 122 is a hole that protrudes through the inner portion 120, and defines an axis having an angular component aligned with the axis B and an angular component normal to the axis B. Defined by the interior of the inner portion 120 is a circular opening 130 for receiving and securing a fuel nozzle. During operation of the engine, thermal cycling and thermal fatigue can result in stress fractures 123, 125. Depending on the size of the stress fracture 123, 125 they may be repairable (as in the shorter stress fracture 125) or may require replacement (as in the longer stress fracture 123 which extends into the heat shield 110).

In general, when the stress fracture 123, 125 extends into the heat shield 110, as in the example stress fracture 123, the heat shield 110 is required to be replaced, rather than repaired as is the case for fractures 125 that are limited to the inner portion 120. In existing systems, however, the fuel nozzle guide 100 is a single cast component and replacing the inner portion 120 necessitates replacing the entirety of the fuel nozzle guide 100.

Obtaining castings for small volume orders, such as those limited to creating the required replacement fuel nozzle guides 100 for a single engine repair process can be prohibitively expensive and/or difficult to source due to their small volume. This is particularly true when considering the turn-around time required to return an engine including the fuel nozzle guide 100 to service.

As disclosed herein, repaired details of the fuel nozzle guide 100, such as the heat shield 110, can be produced without casting by using an additive manufacturing process to quickly produce low volumes of the repair details. An additive manufacturing process, alternatively referred to as a 3D printing process, slices a geometry into multiple distinct approximately two dimensional layers, and iteratively applies each layer to the previous layer to build a three dimensional geometry. Due to the specific nature of the individual builds, the additive manufacturing process provides a faster turnaround time and a cheaper build when the heat shield 110 of a fuel nozzle guide 100 needs replacement.

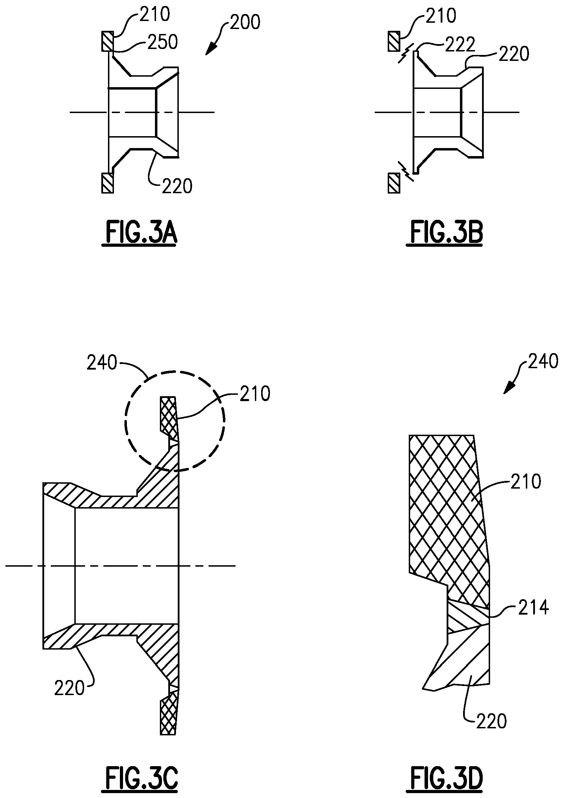

With continued reference to Figures 1 and 2, Figures 3A, 3B and 3C illustrate a repair sequence for replacing just the heat shield 210 of the fuel nozzle guide 200. Figure 3D illustrates a zoomed in view of a section 240 of the repaired article illustrated in Figure 3C. Initially, once damage extending into the heat shield 210 has been identified on a given fuel nozzle guide 200, a milling procedure is applied to a position 250 where the heat shield 210 blends into the inner portion 220. The machining procedure is applied along the entire circumference at the point 250, and separates the heat shield 210 from the inner portion 220. The machining process can include a wire electric discharge machining (EDM) process, a laser machining process, a RAM EDM process, or any other machining process. In some examples, there is no need to maintain the integrity of the heat shield 210, as the heat shield 210 is being replaced, and the machining process selected can be destructive of the heat shield 210.

Once the machining process has been completed, the inner portion 220 is separated from the heat shield 210 as illustrated in Figure 3B. In some examples, the heat shield 210 can then be analyzed to determine the exact dimensions, for an additively manufactured replacement heat shield, or an additively manufactured replacement heat shield 210 is generated according to an object file having a predetermined set of dimensions. In addition, while separated, any repairs that are limited to the inner diameter portion 220 are completed according to any known inner diameter portion repair process. By way of example, these repairs can include repairing at least one crack in the inner portion 220 prior to joining the replacement heat shield 210 to the inner portion 220. By determining the exact dimensions of the heat shield 210, the replacement heat shield 210 generated by the additive manufacturing process can include approximately identical dimensions. As described herein, approximately identical refers to identical within the tolerance boundaries of the additive manufacturing process.

In alternate examples, once the heat shield 210 has been removed, an external circumference 222 of the inner portion 220 is cleaned up via a smoothing or finished process to remove artifacts of the heat shield removal process. Once cleaned, the circumference 222 is measured to determine an inner diameter of the replacement for the damaged heat shield 210, and the replacement heat shield 210 is generated using the additive manufacturing process. The replacement heat shield 210 is specifically tailored to fit the actual dimensions of the inner portion 220. Further, by utilizing an additively manufacturing process to create the cooling splines of the heat shield 210, the cooling splines may include corners that are substantially closer to 90 degree corners than would result from a casting process. This type of corner is referred to as a sharp corner angle, and is characterized by a corner angle in the range of 89-91 degrees.

Once the replacement heat shield 210 has been additively manufactured, the heat shield 210 is properly aligned with the existing inner portion 220, as illustrated in Figure 3C. A welding, or other joining, process is then used to fuse the replacement heat shield 210 to the inner portion 220 to create a final repaired fuel nozzle guide 200. In order to ensure that the repaired article is fully usable in a gas turbine engine, a fusion process is selected that provides a 100% penetration region 214 joining the heat shield 210 to the inner portion 220. Region 240 of Figure 3C is illustrated in a larger fashion in Figure 3D, and illustrates that the 100% penetration is a fusion region 214 between the inner portion 220 and the heat shield 210 that extends the entire axial length of the heat shield 210. By way of example, the fusion process used to achieve the 100% penetration can be one of a plasma weld, an electron beam weld, a laser weld, a gas tungsten arc weld, or any similar fusion technique.

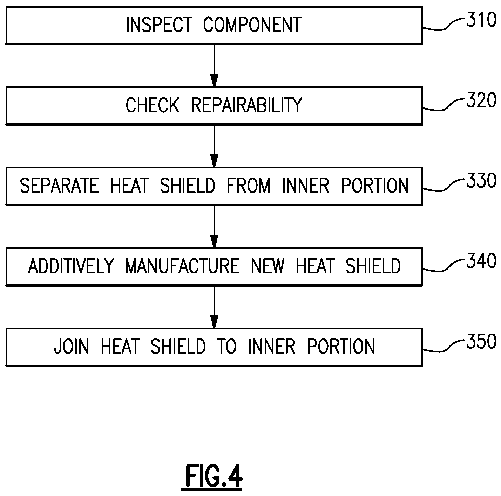

With continued reference to Figures 1-3D, Figure 4 illustrates the repair process described above. Initially a fuel nozzle guide is inspected for damage during engine maintenance, and removed from the engine when damage is detected in an "Inspect Component" step 310. Once the damaged fuel nozzle guide is removed from the engine, it is inspected to determine if the damage is limited to the inner portion, and can be repaired using existing repair process, or if the damage extends into the heat shield necessitating replacement of the heat shield in a "Check Reparability" step 320.

If the damage extends into the heat shield, the heat shield is separated from the inner portion, and the component is measured in a "Separate Heat Shield from Inner Portion" step 330. As part of the separation process, some examples will use an additional cleaning or finishing process to smooth the area of the heat shield and inner portions where the separation occurred.

Once separated and measured, a new heat shield is additively manufactured in an "Additively Manufacture New Heat Shield" step 340. In one example, the new heat shield is additively manufactured using a direct metal laser sintering (DMLS) process.

Once the new heat shield has been additively manufactured, the heat shield is aligned with the inner portion, and a welding or other fusion process is utilized to join the inner portion and the heat shield into a single combined component in a "Join Heat Shield to Inner Portion" step 350. Once joined into a single combined component, the single combined component is returned to the engine and the engine can be returned to operation.

It is further understood that any of the above described concepts can be used alone or in combination with any or all of the other above described concepts. Although an embodiment of this invention has been disclosed, a worker of ordinary skill in this art would recognize that certain modifications would come within the scope of this invention. For that reason, the following claims should be studied to determine the true scope and content of this invention

## Claims

1. A method for repairing a fuel nozzle guide (100; 200) comprising:
mechanically separating a heat shield (110; 210) of a damaged fuel nozzle guide (100; 200) from an inner portion (120; 220) of the damaged fuel nozzle guide (100; 200);
manufacturing a replacement heat shield (110; 210) of the damaged fuel nozzle guide (100; 200); and
joining the replacement heat shield (110; 210) to the inner portion (120; 220).

2. The method of claim 1, wherein manufacturing the replacement heat shield (110; 210) comprises additively manufacturing the replacement heat shield (110; 210).

3. The method of claim 1 or 2, further comprising determining a set of actual dimensions of the heat shield (110; 210) and manufacturing the replacement heat shield (110; 210) according to the determined actual dimensions of the heat shield (110; 210).

4. The method of claim 1, 2 or 3, further comprising removing artifacts of the mechanical separation from the inner portion (120; 220) prior to joining the replacement heat shield (110; 210) to the inner portion (120; 220).

5. The method of any preceding claim, wherein joining the replacement heat shield (110; 210) to the inner portion (120; 220) comprises fusing the replacement heat shield (110; 210) to the inner portion (120; 220).

6. The method of claim 5, wherein fusing the replacement heat shield (110; 210) to the inner portion (120; 220) provides a 100% penetration of the inner portion, and/or uses one of a plasma weld fusion, an electron beam weld fusion, a laser weld fusion, and a gas tungsten arc weld fusion.

7. The method of any preceding claim, further comprising repairing at least one crack (125) in the inner portion (120; 220) prior to joining the replacement heat shield (110; 210) to the inner portion (120; 220).

8. The method of any preceding claim, wherein manufacturing the replacement heat shield (110; 210) comprises creating a replacement heat shield (110; 210) having approximately identical dimensions to the heat shield (110; 210).

9. A fuel nozzle guide (100; 200) comprising:
a heat shield (110; 210), wherein the heat shield (110; 210) comprises a ring defining an axis (B);
an inner portion (120; 220) fused to the heat shield (110; 210) and extending radially inward from and axially along the axis (B); and
wherein the heat shield (110; 210) is an additively manufactured replacement heat shield (110; 210) approximately identical to an original cast heat shield (110; 210).

10. The fuel nozzle guide of claim 9, wherein a fusion between the inner portion (120; 220) and the heat shield (110; 210) extends along a full inner circumference of an inner diameter of the heat shield (110; 210), and/or the fusion provides a 100% penetration of the inner portion (120; 220), and/or the fusion is one of a plasma weld fusion, an electron beam weld fusion, a laser weld fusion, and a gas arc weld fusion.

11. The fuel nozzle guide of claim 9 or 10, wherein the heat shield (110; 210) further includes a plurality of cooling splines (112) extending axially from a face of the heat shield (110; 210), and optionally the plurality of cooling splines (112) are distributed circumferentially evenly about the heat shield (110; 210).

12. The fuel nozzle guide of claim 11, wherein each of the cooling splines (112) in the plurality of cooling splines (112) includes an axially outward corner defining a sharp corner angle, optionally in the range of 89 to 91 degrees.

13. A repair process for a gas turbine engine (20) comprising:
identifying a damaged fuel nozzle guide (100; 200), wherein the damaged fuel nozzle guide (100; 200) is a cast single component;
mechanically separating a heat shield (110; 210) from a remainder of the damaged fuel nozzle guide (100; 200);
additively manufacturing a replacement heat shield (110; 210); and
fusing the replacement heat shield (110; 210) to the remainder of the damaged fuel nozzle guide (100; 200), thereby repairing the damaged fuel nozzle guide (100; 200).

14. The repair process of claim 13, wherein fusing the replacement heat shield (110; 210) to the remainder of the damaged fuel nozzle guide (100; 200) comprises applying a fusion process including a 100% penetration of a contact between the replacement heat shield (110; 210) and the remainder of the damaged fuel nozzle guide (100; 200).

15. The repair process of claim 13 or 14, wherein additively manufacturing the replacement heat shield (110; 210) comprises determining an actual dimension of the remainder of the damaged fuel nozzle guide (100; 200), and additively manufacturing the replacement heat shield (110; 210) to match the actual dimension of the remainder of the damaged fuel nozzle guide (100; 200).
